# EUROPÄISCHE PATENTSCHRIFT

(11) **EP 2 948 265 B1**
(45) Veröffentlichungstag und Bekanntmachung des Hinweises auf die Patenterteilung: **03.04.2019**
(21) Anmeldenummer: 14700168.9
(22) Anmeldetag: 08.01.2014
(51) Int. Cl.: B23G 7/02, B23G 5/06

(54) **GEWINDEFORMWERKZEUG**
THREAD FORMING TOOL
TARAUD

(30) Priorität: 24.01.2013 DE 102013001195; 26.02.2013 DE 102013003291
(43) Veröffentlichungstag der Anmeldung: 02.12.2015
(73) Patentinhaber: Bass GmbH & Co. KG Technik für Gewinde, 97996 Niederstetten (DE)
(72) Erfinder: BÖHM, Werner, 74572 Blaufelden (DE)
(74) Vertreter: Kruspig, Volkmar
(86) Internationale Anmeldenummer: PCT/EP2014/050240
(87) Internationale Veröffentlichungsnummer: WO 2014/114492

(56) Entgegenhaltungen:
- JP-U- H0 549 216
- US-A- 124 570
- US-A- 2 121 380
- US-A1- 2009 291 767
- US-A1- 2011 085 867

## Beschreibung

Die Erfindung betrifft ein Gewindeformwerkzeug mit einem Gewindeteil auf Basis einer schraubenförmigen Wirkfläche und einem anschließenden Einspannschaft, wobei die schraubenförmige Wirkfläche durch Drückstollen gebildet ist und sich das Gewindeteil von einem Anschnitt oder Anlauf in Richtung Einspannschaft erstreckt, sowie weiterhin mit mindestens einem, zwischen den Drückstollen verlaufenden, vom Anschnitt oder Anlauf sich zum Einspannschaft hin erstreckenden, axial orientierten, nutfömigen Kühlkanal gemäß Oberbegriff des Patentanspruchs 1. Ein solches Gewindeformwerkzeug ist aus der US 2011/085867 bekannt.

Aus der DE 102 38 775 B4 ist ein Spanlos-Gewindeformer mit schraubenförmigem Außengewinde vorbekannt, wobei das Außengewinde abwechselnd miteinander verbundene Ränder und Aussparungen zur Erzeugung eines Innengewindes durch plastische Verformung umfasst. Eine Schraubenlinie der Ränder des Außengewindes des vorbekannten Gewindeformers verläuft in entgegengesetzter Richtung zu einer Richtung einer Schraubenlinie des Außengewindes, um den Drehwiderstand während des Gewindeformens, d.h. das Gewindeformdrehmoment zu reduzieren. Der bekannte Gewindeformer weist darüber hinaus eine Schmiernut auf, die auf dem Außengewinde entweder parallel oder diagonal zu einer Achse des Außengewindes verläuft, wobei sich die Schmiernut in einer geraden Linie entweder auf einem Teil des Außengewindes oder über eine gesamte Oberfläche des Außengewindes erstreckt. Wenn die vorbekannten Schmiernuten einen Schrägungswinkel besitzen, d.h. wenn sie in dieselbe Richtung wie die axial angrenzenden Gewinderänder verdreht sind, können die Ölnuten leichter gefertigt werden, und zwar auch dann, wenn die Aussparungsseite schmal ist und der Raum zur Erzeugung der Ölnuten entsprechend klein ausfällt.

Bei dem Gewindeformwerkzeug mit Einspannschaft und einem im Querschnitt im Wesentlichen polygonal geformten Gewindeteil mit schraubenförmiger Wirkfläche nach DE 103 18 199 A1 wird zur Optimierung der Gewindeformgebungsbedingungen eine Schmierung des Werkzeugs dadurch realisiert, indem an den im Wesentlichen konvexen Querschnittsseiten des Gewindeteils des Gewindeformwerkzeugs, jeweils mittig zwischen vorhandenen Drückstollen axial verlaufende Schmiernuten vorgesehen sind. Diesen Schmiernuten kann über die aus einem innen liegenden, zentrischen Schmiermittelkanalsystem im Gewindeformwerkzeug, das sich in die Schmiernuten verzweigt, Schmiermittel zugeführt werden.

Grundsätzlich findet bei Gewindeformwerkzeugen als Werkzeugen für die spanlose Herstellung von Innengewinden eine Kaltverformung des Werkstoffs statt, ohne den Faserverlauf des Werkstoffs und seine kristallinische Struktur zu unterbrechen.

Das Gewindeformen ist hier als ein Eindrücken eines Gewindes in ein Werkstück durch ein Werkzeug mit einer schraubenförmigen Wirkfläche zu verstehen.

Der schraubenförmige, z.B. mit einem Polygon versehene Gewindeteil des Werkzeugs wird mit einem gleichmäßigen, der Steigung des Gewindes entsprechenden Vorschub in ein entsprechend vorgebohrtes Werkstück eingedreht. Hierbei drückt sich das Gewindeprofil über den Anlauf oder Anschnitt des Gewindeteils in den Werkstoff. Die Spannung in der Stauchzone überschreitet die Stauchgrenze und es findet die gewünschte plastische Verformung des Werkstoffs statt. Konkret weicht das Werkstoffmaterial aus und fließt entlang des Gewindeprofils in den freien Werkzeugzahngrund, so dass der Kerndurchmesser des Gewindes gebildet ist.

Von ganz wesentlicher Bedeutung bei derartigen Gewindeformverfahren ist die notwendige Schmierung. Mit Hilfe der Schmierung soll ausgeschlossen werden, dass sich Werkstoff oder sonstige Rückstände auf den Gewindeplattenflanken ansetzen und hierdurch bedingt es zu einem unnötigen Ansteigen des Drehmoments kommt.

Besondere Schwierigkeiten bezüglich der Zu- und Abführung des Kühlmittels entstehen bei der Ausbildung von Innengewinden in Sacklochbohrungen, d.h. die notwendige Menge von Kühl- oder Schmiermittel muss vom plastischen Verformungsbereich über das Werkzeug und am Werkstück vorbei zurückgeführt werden, jedoch dabei genügend Kontakt zum Werkzeug bzw. Werkstück besitzen, um die gewünschte Wirkung als Wärmesenke zu erreichen.

Weiterhin besteht grundsätzlich das Bestreben, die einzusetzende Kühlmittelmenge zu reduzieren. Diesbezüglich wird zum Kühlen auf eine Minimalschmierung zurückgegriffen, wobei als Schmiermittel eine Mischung aus Luft und dem eigentlichen Kühlmittel, z.B. Öl eingesetzt wird.

Aus dem Vorgenannten ist es Aufgabe der Erfindung, ein weiterentwickeltes Gewindeformwerkzeug mit einem Gewindeteil auf der Basis einer schraubenförmigen Wirkfläche anzugeben, welches bezüglich der zu erreichenden Schmier- und Kühleigenschaften optimiert ist und das insbesondere für den Einsatz bei Gewindeformprozessen mit Mimimalmengenschmierung Öl/Emulsion geeignet ist.

Die Lösung der Aufgabe der Erfindung erfolgt durch ein Gewindeformwerkzeug gemäß der Merkmalskombination nach Patentanspruch 1, wobei die Unteransprüche mindestens zweckmäßige Ausgestaltungen und Weiterbildungen umfassen.

Es sei an dieser Stelle angemerkt, dass die folgende Erläuterung der speziellen Ausbildung der Kühlkanäle nicht nur bei Gewindeformwerkzeugen auf der Basis einer spanlosen Bearbeitung, sondern auch bei klassischen Gewindeschneidwerkzeugen mit spanender Bearbeitung, also üblichen Gewindeschneidern bzw. Gewindebohrern Anwendung finden kann.

Es wird demnach von einem Gewindeformwerkzeug mit einem Gewindeteil auf der Basis einer schraubenförmigen Wirkfläche und einem anschließenden Einspannschaft ausgegangen, wobei die schraubenförmige Wirkfläche durch Drückstollen gebildet ist. Das Gewindeteil erstreckt sich von einem sogenannten Anschnitt oder einem Anlauf in Richtung des Einspannschafts über einen je nach Anwendungsfall definierten Längenbereich. Weiterhin ist mindestens ein, zwischen den Drückstollen verlaufender, von Anschnitt oder Anlauf sich zum Einspannschaft hin erstreckender, axial orientierter, nutförmiger Kühlkanal zur Aufnahme und Führung eines Kühlmittels vorhanden.

Der erfindungsgemäßen Grundidee folgend, vergrößert sich die Querschnittsfläche, insbesondere die Breite des mindestens einen Kühlkanals vom Anschnitt in Richtung des Einspannschafts.

Es findet also quasi eine Aufweitung des Kühlkanals von der Werkzeugspitze in Richtung Ende des Gewindeteils statt.

Es hat sich in überraschender Weise gezeigt, dass eine derartige Ausbildung des Kühlkanals zu einer optimierten Führung des Kühlmittels mit maximalem Schmier-Kühleffekt führt, so dass die einzusetzende Kühlmenge, insbesondere die Menge eines flüssigen Kühlmittels, reduzierbar ist.

Erfindungsgemäß verläuft die Vergrößerung der Querschnittsfläche, insbesondere die Breitenvergrößerung kontinuierlich und es geht das zum Einspannschaft weisende Ende des mindestens einen Kühlkanals in einen konisch aufgefächerten Bereich über.

Im Abschnitt des konisch aufgefächerten Bereichs kann bei einer weiteren Ausgestaltung der Erfindung die Kühlkanaltiefe abnehmend ausgeführt sein und nicht über die Gesamtlänge des Anschnitts verlaufen.

Bei einer Variante der Erfindung erstreckt sich der mindestens eine Kühlkanal in Axialrichtung über das Gewindeteil bis hinein in einen Übergangsbereich hin zum Einspannschaft. Dieser Übergangsbereich kann bezogen auf den Einspannschaft durchmesserreduziert, d.h. entsprechend im Durchmesser abgesetzt ausgeführt werden.

Zum Zuführen des Kühlmittels ist weiterhin vorgeschlagen, in den mindestens einen Kühlkanal mindestens eine Radialbohrung einmünden zu lassen, welche in eine zentrische Durchgangsbohrung übergeht, die bis zum Schaftende hin reicht, um diesbezüglich den Kühlmittelzufluss zu gewährleisten.

Der mindestens eine erfindungsgemäße Kühlkanal kann bei einer Ausführungsform der Erfindung an der mindestens einen Radialbohrung beginnen, sich aber auch in Richtung Radialbohrung zur Spitze des Werkzeugs und von der Radialbohrung in Richtung Schaftende mit Blick auf die erläuterte Breitenvergrößerung erstrecken oder an der Radialbohrung beginnen und sich in Richtung Schaft vergrößern.

Bei einer Realisierung der Erfindung sind n-Drückstollen ausgebildet, wobei jeweils zwischen zwei benachbarten Drückstollen ein Kühlkanal verläuft.

Hierbei liegt die Zahl n im Bereich zwischen 2 und 10, bevorzugt zwischen 3 und 5.

Die mindestens eine Kühlmittel-Radialbohrung kann einen Verlauf aufweisen, der von der Senkrechten bezüglich der Längsachse des Werkzeugs abweicht, und hier insbesondere einen Schrägungswinkel besitzen, der zur Werkzeugspitze, d.h. zum Anlauf oder Anschnitt orientiert ist.

Erfindungsgemäß ist darüber hinaus die Verwendung des vorgestellten Gewindeformwerkzeugs für einen Gewindeformprozess mit Minimalmengenschmierung auf der Basis eines Luft-/Schmiermittelgemisches.

Die Erfindung soll nachstehend anhand eines Ausführungsbeispiels sowie unter Zuhilfenahme von Figuren näher erläutert werden.

Hierbei zeigen:
- Fig. 1: eine nicht maßstäbliche Längsansicht des erfindungsgemäßen Gewindeformwerkzeugs mit zentrischer Kühlmittelbohrung sowie eine Detaildarstellung des Gewindeteils und erkennbarer Vergrößerung der Querschnittsfläche, insbesondere der Breite einer Außenoberflächen-Kühlnut;
- Fig. 2: eine Längsschnittdarstellung eines Abschnitts des Gewindeteils des Gewindeformwerkzeugs mit schräg verlaufender Radialbohrung, die in den zentrischen Kühlkanal übergeht, und
- Fig. 3: eine Seitenansicht einer weiteren Ausführungsform des Gewindeformwerkzeugs mit sich in der Querschnittsfläche, insbesondere der Breite vergrößernden Kühlkanals nebst Detaildarstellung der konisch aufgefächerten Bereiche des bzw. der Kühlkanäle.

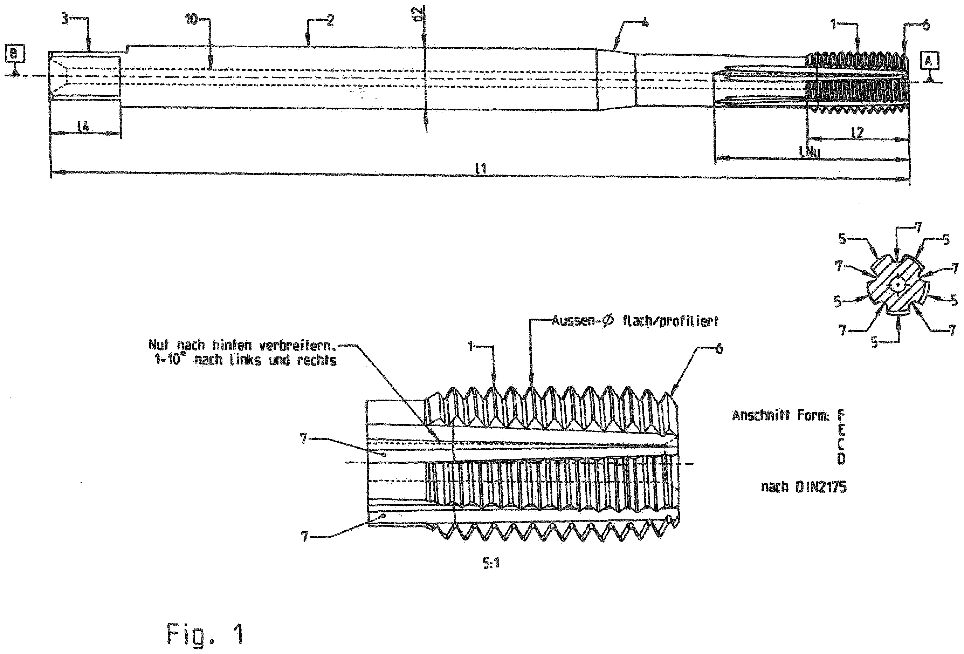

Bei der Darstellung gemäß Fig. 1 ist im oberen Figurenteil eine Längsseitenansicht eines erfindungsgemäßen Gewindeformwerkzeugs sowie eine Stirnseitenansicht mit Blick auf das Gewindeteil dargestellt.

Das Gewindeformwerkzeug weist demnach eine schraubenförmige Wirkfläche 1 auf und besitzt einen Einspannschaft 2 mit einer Werkzeughalterung 3, z.B. in Form eines Vielkants, insbesondere eines Vierkants.

Der Aufbau des Gewindeformwerkzeugs ist im Wesentlichen stabförmig und besitzt zwischen seiner Spitze im Bereich A und seinem Einspannende im Bereich B eine Durchmesserstufung 4, welche quasi einen Übergangsbereich zwischen dem Gewindeteil und dem Einspannschaft 2 bildet.

In der Frontansicht gemäß Fig. 1, d.h. der Ansicht auf die Stirnseite des Gewindeformwerkzeugs, sind fünf Drückstollen 5 erkennbar.

Das Gewindeteil 1 erstreckt sich, wie in der Fig. 1 gezeigt, von einem Anschnitt oder Anlauf 6 in Richtung Einspannschaft 2, und zwar über einen definierten Längenabschnitt.

Zwischen den Drückstollen 5 befinden sich Kühlkanäle 7, die als Detaildarstellung in der Fig. 1, unterer Bildteil erkennbar sind.

Die Kühlkanäle 7 sind gemäß einer Ausführungsform in Richtung Einspannschaft 2 verbreitert, und zwar ausgehend von einer gedachten durchgehenden Geradlinie beispielsweise 1° bis 10° nach links und rechts.

Das Gewindeteil ist im Außendurchmesser profiliert und der Anschnitt besitzt den in der Figur dargestellten beispielhaften Anschnittwinkel.

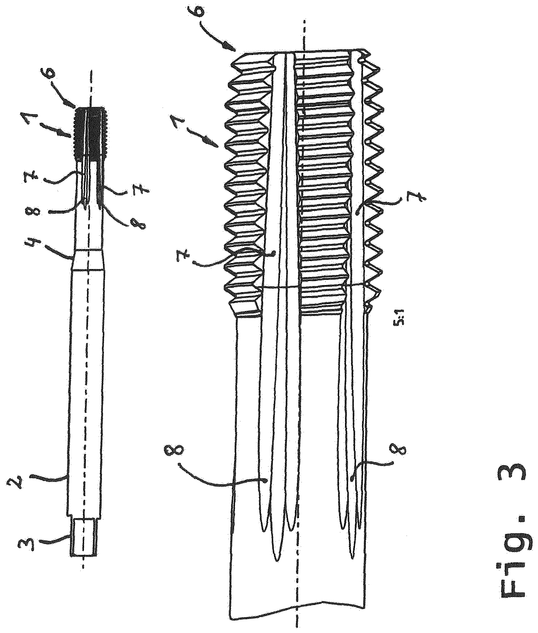

Die Oberflächenvergrößerung der Nuten 7 verläuft beim Ausführungsbeispiel gemäß den Figuren kontinuierlich und geht, wie in den Fig. 1 und 3 gezeigt, in einen, beispielhaft konisch aber auch muschelartig aufgefächerten Bereich 8 über.

Im Abschnitt des konisch aufgefächerten Bereichs 8 kann die Tiefe des Kühlkanals 7 abnehmend ausgeführt werden.

Wie aus den Darstellungen nachvollziehbar ist, erstreckt sich die Ausbildung der Kühlkanäle 7 in Axialrichtung über das Gewindeteil 1 hinaus bis hinein in den Bereich hin zum Einspannschaft über eine definierte Länge des durchmesserreduzierten Teiles des Gewindeformwerkzeugs (siehe jeweils die oberen Darstellungen gemäß Fig. 1 und 3).

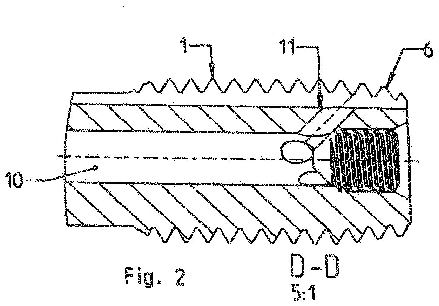

Wie aus der Fig. 2 nachvollziehbar, die einen Längsschnitt durch den vorderen Teil des Gewindeteils 1 darstellt, ist eine zentrische Durchgangsbohrung 10 im Gewindeformwerkzeug ausgebildet, die an ihrem vorderen, zum Anlauf 6 weisenden Ende verschlossen ist und in mindestens eine Radialbohrung 11 übergeht. Durch die zentrische Bohrung 10 nebst angeschlossener Radialbohrung 11 kann Kühlmittel zugeführt und über die entsprechenden Kühlkanäle 7 nach hinten abgeführt werden.

Die Radialbohrung 11 weist einen Verlauf auf, der von der Senkrechten bezüglich der strichpunktierten Längsachse des Werkzeugs abweicht, und zwar beispielhaft einen Winkel im Bereich von 30° bis <90°, z.B. 45° mit Ausströmrichtung zum Anlauf 6 hin aufweist.

Die Anzahl der Kühlkanäle 7 gemäß Ausführungsbeispiel beträgt fünf und es sind fünf Drückstollen 5 ausgebildet. Die Nutbreite weitet sich beispielhaft in einem Bereich von ca. 1 mm bis in einen Fächerbereich von ca. 3 mm auf.

Die Oberfläche des Gewindeformwerkzeugs, mindestens im Bereich des Gewindeteils, ist gehärtet und gegebenenfalls beschichtet.

Die Ausbildung der Kühlkanäle 7 kann durch an sich bekanntes Schleifen realisiert werden, wobei alternative Fertigungsverfahren denkbar sind.

## Patentansprüche

1. Gewindeformwerkzeug mit einem Gewindeteil auf der Basis einer schraubenförmigen Wirkfläche (1) und einem anschließenden Einspannschaft (2), wobei die schraubenförmige Wirkfläche (1) durch Drückstollen (5) gebildet ist und sich das Gewindeteil von einem Anschnitt oder Anlauf (6) in Richtung Einspannschaft (2) erstreckt, sowie weiterhin mit mindestens einem, zwischen den Drückstollen (5) verlaufenden, von Anschnitt oder Anlauf (6) sich zum Einspannschaft (2) hin erstreckenden, axial orientierten, nutfömigen Kühlkanal (7),
**dadurch gekennzeichnet, dass**
sich die Breite des mindestens einen Kühlkanals (7) vom Anschnitt (6) in Richtung Einspannschaft (2) vergrößert, wobei die Breitenvergrößerung kontinuierlich verläuft und das zum Einspannschaft (2) weisende Ende des mindestens einen Kühlkanals (7) in einen konisch aufgefächerten Bereich (8) übergeht und im Abschnitt des konisch aufgefächerten Bereichs (8) die Kühlkanaltiefe abnimmt.

2. Gewindeformwerkzeug nach Anspruch 1,
**dadurch gekennzeichnet, dass**
der mindestens eine Kühlkanal (7) sich in Axialrichtung über das Gewindeteil (1) bis hinein in einen Übergangsbereich zum Einspannschaft (2) erstreckt.

3. Gewindeformwerkzeug nach einem der vorangegangenen Ansprüche, **dadurch gekennzeichnet, dass**
in den mindestens einen Kühlkanal mindestens eine Radialbohrung (11) mündet, welche in eine zentrische Durchgangsbohrung (10) übergeht, die bis zum Schaftende (2) reicht, um einen Kühlmittelzufluss zu gewährleisten.

4. Gewindeformwerkzeug nach Anspruch 3,
**dadurch gekennzeichnet, dass**
der mindestens eine Kühlkanal (7) an der Radialbohrung (11) beginnt.

5. Gewindeformwerkzeug nach einem der vorangegangenen Ansprüche, **dadurch gekennzeichnet, dass**
n-Drückstollen (5) ausgebildet sind, wobei jeweils zwischen zwei benachbarten Drückstollen (5) ein Kühlkanal (7) verläuft.

6. Gewindeformwerkzeug nach Anspruch 5,
**dadurch gekennzeichnet, dass**
n im Bereich zwischen 2 und 10 liegt.

7. Gewindeformwerkzeug nach einem der Ansprüche 3 bis 6,
**dadurch gekennzeichnet, dass**
die mindestens eine Radialbohrung (11) einen Verlauf aufweist, der von der Senkrechten bezüglich der Längsachse des Werkzeugs abweicht.

8. Verwendung eines Gewindeformwerkzeugs nach einem oder mehreren der vorangegangenen Ansprüche für einen Gewindeformprozess mit Minimalmengenschmierung auf der Basis eines Luft-/Schmiermittelgemisches.

## Claims

1. Thread forming tool with a threaded part on the basis of a helical active surface (1) and an adjoining clamping shank (2), wherein the helical active surface (1) is formed by pressing lugs (5),and the threaded part extends from a chamfer or start-up (6) in the direction of the clamping shank (2), wherein the helical effective surface (1) is formed by pressing lugs (5) and the threaded part extends from a chamfer or start-up (6) in the direction of the clamping shank (2), and further comprising at least one axially oriented groove-shaped cooling channel (7) extending between the pressing lugs (5) and extending towards the clamping shank (2) from the chamfer or start-up (6),
**characterized in that**
the width of the at least one cooling channel (7) enlarges from the chamfer (6) in the direction of the clamping shank(2), the increase in width extending continuously and the end of the at least one cooling channel (7) facing the clamping shaft (2) merging into a conically fanned-out region (8) and the cooling channel depth decreases in the section of the conically fanned-out region (8)

2. Thread forming tool according to claim 1,
**characterized in that** the at least one cooling channel (7) extends in axial direction via the threaded part (1) into an transition region to the clamping shank(2).

3. Thread forming tool according to one of the preceding claims, **characterized in that** at least one radial bore (11) opens into the at least one cooling channel and merges into a central through bore (10) which extends to the shank end (2) in order to ensure an inflow of coolant.

4. Thread forming tool according to claim 3,
**characterized in that** the at least one cooling channel begins on the radial bore (11).

5. Thread forming tool according to one of the preceding claims, **characterized in that** n-pressing lugs (5) are formed, wherein a cooling channel runs in each case between two adjacent pressing lugs (5).

6. Thread forming tool according to claim 5,
**characterized in that** n is in the range between 2 and 10.

7. Thread forming tool according to one of claims 3 to 6,
**characterized in that** the at least one radial bore (11) has a profile which deviates from the vertical with respect to the longitudinal axis of the tool.

8. Use of a thread forming tool according to one or more of the preceding claims for a thread forming process with minimum quantity lubrication based on an air/lubricant mixture.

## Revendications

1. Outil de formation de taraudage comportant une partie filetée sur la base d'une surface active hélicoïdale (1) et une tige de serrage (2) qui s'y raccorde, la surface active hélicoïdale (1) étant formée par des pattes de pression (5) et la partie filetée s'étendant depuis une entrée ou amorce (6) en direction de la tige de serrage (2), et comportant en outre au moins un canal de refroidissement (7) en forme de rainure s'étendant entre les pattes de pression (5) depuis l'entrée ou l'amorce (6) jusqu'à la tige de serrage (2) et orienté axialement,
**caractérisé en ce que**
la largeur dudit au moins un canal de refroidissement (7) augmente à partir de l'entrée (6) en direction de la tige de serrage (2), l'augmentation en largeur s'étendant en continu, et l'extrémité dudit au moins un canal de refroidissement (7) dirigée vers la tige de serrage (2) se transforme en une zone déployée en éventail conique (8), et la profondeur du canal de refroidissement diminue au niveau de la zone déployée en éventail conique (8).

2. Outil de formation de taraudage selon la revendication 1,
**caractérisé en ce que**
ledit au moins un canal de refroidissement (7) s'étend en direction axiale au-delà de la partie filetée (1) jusqu'à l'intérieur d'une zone de transition vers la tige de serrage (2).

3. Outil de formation de taraudage selon l'une des revendications précédentes, **caractérisé en ce que**
au moins un perçage radial (11) débouche dans ledit au moins un canal de refroidissement et se transforme en un perçage traversant centré (10) qui s'étend jusqu'à l'extrémité de la tige (2) pour assurer une alimentation en réfrigérant.

4. Outil de formation de taraudage selon la revendication 3,
**caractérisé en ce que**
ledit au moins un canal de refroidissement (7) commence au niveau du perçage radial (11).

5. Outil de formation de taraudage selon l'une des revendications précédentes, **caractérisé en ce que**
il est prévu n pattes de pression (5), un canal de refroidissement (7) s'étendant entre deux pattes de pression (5) respectives voisines.

6. Outil de formation de taraudage selon la revendication 5,
**caractérisé en ce que**
n est compris entre 2 et 10.

7. Outil de formation de taraudage selon l'une des revendications 3 à 6, **caractérisé en ce que**
ledit au moins un perçage radial (11) présente un tracé qui s'écarte de la perpendiculaire par rapport à l'axe longitudinal de l'outil.

8. Utilisation d'un outil de formation de taraudage selon l'une ou plusieurs des revendications précédentes pour un processus de formation de taraudage utilisant une quantité minimale de lubrifiant à la base d'un mélange d'air/lubrifiant.
